# EUROPEAN PATENT APPLICATION

(11) **EP 4 675 613 A2**
(43) Date of publication of application: **07.01.2026**
(21) Application number: 25184848.7
(22) Date of filing: 24.06.2025
(51) Int. Cl.: G10L 15/22, G10L 15/20, G10L 15/16, G10L 13/027, G10L 15/26, G10L 15/183

(54) **ACCURATE RESPONSE FOR NOISY USER SPEECH BY CROSS-ATTENTION STITCHING ENCODED AUDIO FEATURES INTO LARGE LANGUAGE MODELS**

(30) Priority: 02.07.2024 US 202418762552
(71) Applicant: Google LLC, Mountain View, CA 94043 (US)
(72) Inventor: SHIN, Dongeek, San Jose (US)
(74) Representative: Davis, Steven George

(57) **Abstract**

Implementations relate to utilizing acoustic features of audio data that captures a user speech to help formulate a response that accurately respond to the user speech. In various implementations, text embedding(s) are generated based on processing a speech recognition of the user speech. The text embedding(s) can be processed using a multi-head attention of a transformer decoder, to generate intermediate attention features. In various implementations, the audio data of the user speech can be processed to generate audio embedding(s) that represent acoustic features of the audio data (e.g., whether the audio data, or a specific portion thereof, is noisy, etc.). The intermediate attention features and the audio embedding(s) can be provided to a cross-attention mechanism of the transformer decoder, to generate a model output from which the response to the user speech is derived.

## Description

### Background

Generative models (e.g., large language models, "LLMs") find increasing applications in user interactive systems (e.g., a chat application) for computer-to-human interactions. A user interactive system often includes one or more user interfaces, such as a graphical user interface (GUI) for user interactions via touch or typed user input(s) and/or a voice user interface for user interactions via voice input(s), etc. The voice user interface is often coupled to, for instance, an automatic speech recognition (ASR) engine that transcribes a voice input into transcribed text, where a response to the voice input can be generated based on the transcribed text. For example, in generating the response, the transcribed text can be processed using an LLM and/or other components such as a natural language understanding ("NLU") engine, etc.

However, in a noisy environment, the ASR engine may output a noisy transcription (e.g., one that has error(s) due to the noisy environment), and the noisy transcription will be processed by the LLM. This can result in the response to the voice input being inaccurate or undesired, which elongates back-and-forth communications between a user of the voice input and the user interactive system that integrates or accesses the ASR engine. The elongated communications causes undesired or excessive consumption of computational resources and other types of resources, such as network and battery resources associated with the active running and operation of the user interactive system.

### Summary

Techniques are described herein for enhancing capabilities of a user interactive system (e.g., a chat application) in responding more efficiently to user input(s), in particular, voice input(s). In some implementations, text embedding(s) derived from a speech recognition (also referred to as "transcript", "transcription", or "recognized text") of a voice input (e.g., a user speech), as well as audio embedding(s) derived from audio data that captures the voice input, can be processed using a machine learning ("ML") model, to generate a model output, from which a response to the voice input can be determined. The text embedding(s) can be in the format of numerical vector(s) and represent semantic meanings (e.g., word semantics) of the speech recognition of the voice input. The audio embedding(s) can be in the format of numerical vector(s) and represent audio features of the audio data that captures the voice input.

In some implementations, the ML model can be a generative model. The generative model can be, for instance, a large language model ("LLM") that the user interactive system includes (or otherwise accesses). In some implementations, the LLM can be transformer-based. In some implementations, the LLM can include a decoder portion (sometimes referred to as "LLM decoder", "transformer decoder", etc.) and/or an encoder portion (sometimes referred to as "LLM encoder", "transformer encoder", etc.). The encoder portion of the LLM can include one or more multi-head attention mechanisms (may be referred to shortly as "multi-head attention(s)"), where each multi-head attention mechanism can include multiple attention heads. Additionally, or alternatively, the decoder portion of the LLM can include one or more multi-head attention mechanisms, where each multi-head attention mechanism can include multiple attention heads. Each of the multiple attention heads in the multi-head attention mechanism of the encoder portion (or the decoder portion) can be, for instance, a single attention head including a query matrix, a key matrix, and a value matrix.

In some implementations, the audio embedding(s) can be interleaved with intermediate attention features computed from the text embedding(s), which are provided to a particular multi-head attention mechanism of the decoder portion that is coupled to the encoder portion. The intermediate attention features computed from the text embedding(s) can be in the form of intermediate output embedding(s). The intermediate output embedding(s) can be computed, for instance, by the decoder portion of the generative model (e.g., LLM) based on processing the text embedding(s) that represent the semantic meanings of the speech recognition of the voice input. The particular multi-head attention mechanism can be utilized to combine asymmetrically two separate embedding sequences (e.g., the audio embedding(s) and the intermediate output embedding(s) derived from the text embedding(s)), and thus is often referred to as a "cross-attention" mechanism.

In some implementations, the cross-attention mechanism, like other multi-head attention mechanism(s) in the encoder portion (or the decoder portion), includes multiple attention heads, where each of the multiple attention heads can be a single attention head including the query matrix, the key matrix, and the value matrix. In some implementations, unlike the other multi-head attention mechanism(s), the cross-attention mechanism maps the aforementioned intermediate attention features (e.g., computed based on processing of the text embedding(s)) to "Queries" (in the form of matrix) based on multiplying the intermediate output embedding(s) derived from the text embedding(s) with the query matrix, and maps the audio embedding(s) into "Keys" (in the form of matrix) and "Values" (in the form of matrix) based on multiplying the audio embedding(s) with the key matrix and the value matrix, respectively. In some implementations, dot products can be acquired based on multiplying the "Queries" (in the form of matrix) and "Keys" (in the form of matrix). In some implementations, the dot products can each be divided by a scaling factor, and a softmax function can be applied over the scaled dot products, to acquire weights for the "Values". The acquired weights (in the form of matrix) can be multiplied with the "Values" (in the form of matrix) to compute an output, e.g., as a weighted sum of the "Values" in accordance with the acquired weights.

Based on the output, a response to the voice input can be derived. The response can be rendered visually and/or audibly in response to the voice input. Such response, generated based on processing both text features of a (potentially inaccurate) speech recognition and raw audio features (*e.g*., an embedding thereof), can more accurately reflect a user intent of the voice input and can facilitate an effective communication between a user of the voice input and the user interactive system (e.g., the chat application). Put another way, implementations disclosed herein can generate responses that are truly responsive to a user's speech despite the speech recognition of that speech being inaccurate. Those implementations enable generation of such responses by processing, using a generative model, both audio features of audio that captures the user's speech along with text features of an inaccurate transcription of that speech.

By using techniques described herein, audio embedding(s) are applied to assist the user interactive system in formulating a response responsive to a voice input. This ensures that the formulated response includes appropriate content that is responsive to the voice input, even in a noisy environment where the ASR engine fails to accurately recognize word content of the voice input. For instance, a user may provide a spoken utterance such as "Is panther a lion?". When uttering the word "lion", an environment of the user may suddenly become very noisy, so that the ASR engine output a speech recognition of "Is panther a liar?" for subsequent formulation of a response to the spoken utterance. Using the speech recognition of "Is panther a liar?", a system may generate a response such as "As an animal, I am not sure whether panther lies". Such response may confuse the user who asked "Is panther a lion?" by including content not sought by the user's spoken utterance. However, using techniques described herein, a more appropriate/accurate response such as "I hear you asking a question starting with "Is panther a", but somehow the environment is so noisy that I cannot hear you clearly after that, what are you asking about 'panther'?" Accordingly, techniques described herein may avoid or reduce unnecessary back-and-forth communications between the user and the user interactive system. This reduces the chance of unnecessarily elongated communications between the user and the user interactive system, and thus saving various types of associated resources (e.g., computational resources).

In various implementations, a computer-implemented method ("a method") is provided and can be implemented using the aforementioned user interactive system (sometimes simply referred to as "system"). As described above, the user interactive system can be, or can include, a chat application. In various implementations, the method can include: receiving the audio data that captures a voice input (e.g., a user speech). For instance, the user interactive system can include, or otherwise access, one or more audio-receiving units (e.g., microphones) to receive the audio data that captures the voice input (e.g., the user speech).

In various implementations, the method can further include: in response to receiving the audio data capturing the user speech, processing the audio data (that captures the user speech) to determine a speech recognition (also referred to as "transcript" or "transcription", etc.) of the user speech. For instance, the user interactive system can include, or otherwise access, an automatic speech recognition (ASR) engine. In response to receiving the audio data capturing the user speech, the ASR engine can be applied to process the audio data capturing the user speech, to determine the speech recognition of the user speech. It is noted that, the audio data, while capturing the user speech, can also capturing other sounds within an environment where the user speech is captured. The other sounds can be referred to as "noises" with respect to the user speech, and can include, but are not limited to: people talking, dog barking, bird singing, etc.

In various implementations, the method can further include: processing the speech recognition of the user speech, to derive a text representation (e.g., one or more text embeddings each in the format of numeric vector(s)) that represents semantic meanings of the speech recognition of the user speech. For instance, the user interactive system can include, or otherwise access, a text encoder to process the speech recognition of the user speech, to derive the text representation.

In various implementations, the method can further include: processing the audio data capturing the user speech, to derive an audio representation (e.g., one or more audio embeddings each in the format of numeric vector(s)) that represents acoustic features (also referred to as "audio features") of the audio data that captures the user speech. For instance, the user interactive system can include, or otherwise access, an audio encoder to process the audio data (that captures the user speech) to generate the audio representation. In some implementations, the audio representation of the audio data that captures the user speech, for instance, can indicate whether the audio data is lacking speech(es), whether the audio data reflects a particular source of noise (e.g., bird chirping), and/or whether the audio data is associated with an unacceptably low signal-to-noise ratio "SNR", etc.

In various implementations, the method can further include: processing both the audio representation (e.g., the one or more audio embeddings) and the text representation (e.g., the one or more text embeddings), using a ML model, to generate a model output from which a response to the voice input is determined. In various implementations, the method can further include: causing the response to be rendered in response to the voice input. For instance, the system can include a display, and the response can be rendered visually, via the display, in response to the voice input. Additionally, or alternatively, the system can include a speaker, and the response can be rendered audibly, via the speaker, in response to the voice input.

In some implementations, optionally, the method can include: determining, in response to receiving the audio data capturing the user speech, whether the audio data capturing the user speech is noisy. Such determination can be performed prior to, at the same time as, or subsequent to determining the speech recognition of the user speech. In some implementations, the system determines whether the audio data capturing the user speech is noisy based on a distance between a user of the user speech and a client device that captures the audio data. Additionally, or alternatively, in some implementations, the system determines whether the audio data capturing the user speech is noisy based on a signal-to-noise ratio ("SNR") determined for the audio data.

For example, the system can determine that the audio data is noisy based on determining that the distance between the user of the user speech and the client device that captures the audio data is beyond a predefined distance threshold. As another example, the system can determine that the audio data is noisy based on the SNR determined for the audio data not satisfying a SNR threshold.

In some implementations, optionally, the system generates the one or more audio embeddings that represent the acoustic features of the audio data in response to the audio data being determined to be noisy. In other words, the system may not generate the one or more audio embeddings (e.g., the aforementioned audio embedding(s)) to assist in formulating the response for the user speech if the audio data capturing the user speech is not identified/determined to be noisy.

In some implementations, the system generates the one or more audio embeddings that represent the acoustic features of the audio data by: processing the audio data to extract the acoustic features of the audio data; and processing the acoustic features, using an audio encoder, to generate the one or more audio embeddings. In some implementations, processing the audio data to extract the acoustic features of the audio data can include: generating a spectrogram from the audio data capturing the user speech, and processing the spectrogram to extract spectrogram features from the spectrogram as the acoustic features.

In some implementations, the ML model is a generative model, such as a large language model ("LLM"). In some implementations, the LLM can be transformer-based. For instance, the LLM can include a transformer decoder and/or a transformer encoder. In some implementations, processing both the one or more audio embeddings and the one or more text embeddings can include: interleaving the one or more audio embeddings with intermediate attention features computed by the transformer decoder of the LLM using the one or more text embeddings; and providing the interleaved one or more audio embeddings and intermediate attention features to a multi-head attention (e.g., "cross-attention") of the LLM.

In some implementations, the speech recognition of the user speech may be (or may include) a misrecognition. In this case, the response generated using the system described herein can include content that is responsive to the user speech but not the misrecognition. As a non-limiting example, the user speech can be: "what's the weather today?", and the user speech can be mis-transcribed as "Where is the store" due to a noisy environment of the user speech. In this example, instead of providing an undesired response (e.g., "A convenience store is near your place, about 100 meters north") responsive to the misrecognition (i.e., "where is the store"), the system disclosed herein may generate a response such as "Sorry, I couldn't hear you talk well, could you repeat?" or "Sorry, I hear you saying 'what's the weather', but cannot hear you clearly after that. There seems to be a sudden bird singing".

In various implementations, the LLM can be acquired based on fine-tuning a pre-trained LLM using one or more training instances, and the acquired LLM can leverage raw audio data in formulating a response for audible user input in case the audio data capturing the user speech is too noisy for the user speech to be correctly transcribed). In some implementations, the one or more training instances can each include a training instance input and a ground truth response. The training instance input can include, for instance, a particular type of noisy audio data capturing a user speech. The ground truth response can be manually curated, for instance, based on actual content of the user speech, a speech recognition of the user speech by the ASR engine, a noise level of the noisy audio data, a noise source of the noisy audio data, etc.. In some implementations, during the fine-tuning of the pre-trained LLM, techniques described herein leverage transfer learning from the pre-trained LLM and a model (e.g., an audio encoder) pre-trained on audio data (e.g., noisy audio data).

The preceding is presented as an overview of only some implementations disclosed herein. These and other implementations are disclosed in additional detail herein. For example, additional and/or alternative implementations are disclosed herein such as utilizing a spectrogram converter to convert raw audio data capturing the voice input into a spectrogram (e.g., log mel type). In some implementations, the raw audio data can be captured or recorded via multiple microphones. In this case, such raw audio data conversion process can be repeated per channel independently. As another example, in some implementations, the audio encoder can be a massively large convolutional neural network with an embedding head. The audio encoder can be fine-tuned such that the embedding head fully summarizes the audio semantics of audio data it receives.

Various implementations can include a non-transitory computer readable storage medium storing instructions executable by a processor to perform a method such as one or more of the methods described herein. Yet other various implementations can include a system including memory and one or more hardware processors operable to execute instructions, stored in the memory, to perform a method such as one or more of the methods described herein.

### Brief Description of the Drawings

FIG. 1A depicts a block diagram of an example environment that demonstrates various aspects of the present disclosure, and in which some implementations disclosed herein can be implemented.
FIG. 1B illustrates an example process flow of generating a response using a user interactive system in accordance with various aspects of the present disclosure.
FIG. 1C illustrates an example generative model having an encoder portion and a decoder portion, in accordance with various aspects of the present disclosure.
FIG. 1D illustrates an example generative model having a cross-attention mechanism, in accordance with various aspects of the present disclosure.
FIG. 2A depicts a scenario of human-to-computer interactions without utilizing an audio encoder, in accordance with various aspects of the present disclosure.
FIG. 2B depicts a scenario of human-to-computer interactions utilizing an audio encoder, in accordance with various aspects of the present disclosure.
FIG. 2C depicts another scenario of human-to-computer interactions utilizing an audio encoder, in accordance with various aspects of the present disclosure.
FIG. 3A depicts a flowchart illustrating an example method of generating a response, in accordance with various aspects of the present disclosure.
FIG. 3B depicts a flowchart illustrating another example method of generating a response, in accordance with various aspects of the present disclosure.
FIG. 4 depicts a flowchart illustrating an example method of fine-tuning a large language model using a training instance, in accordance with various aspects of the present disclosure.
FIG. 5 depicts an example architecture of a computing device, in accordance with various implementations.

### Detailed Description

The following description with reference to the accompanying drawings is provided for understanding of various implementations of the present disclosure. It's appreciated that different features from different implementations may be combined with and/or exchanged for one another. In addition, those of ordinary skill in the art will recognize that various changes and modifications of the various implementations described herein can be made without departing from the scope and spirit of the present disclosure. Descriptions of well-known or repeated functions and constructions may be omitted for clarity and conciseness.

The terms and words used in the following description and claims are not limited to the bibliographical meanings, and are merely used by the inventor to enable a clear and consistent understanding of the present disclosure. Accordingly, it should be apparent to those skilled in the art that the following description of various embodiments of the present disclosure is provided for the purpose of illustration only and not for the purpose of limiting the present disclosure as defined by the appended claims and their equivalents.

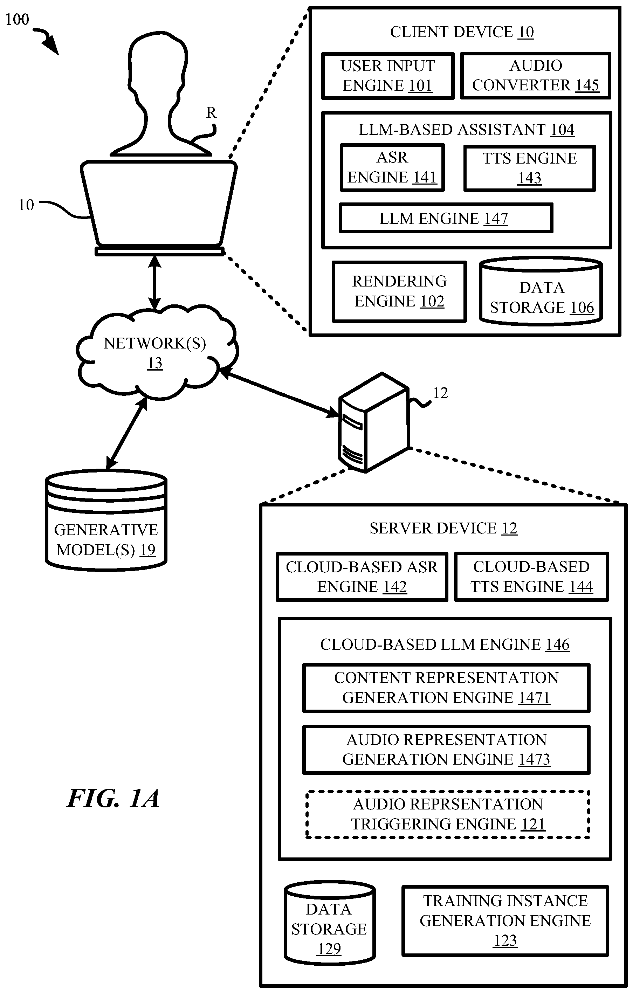

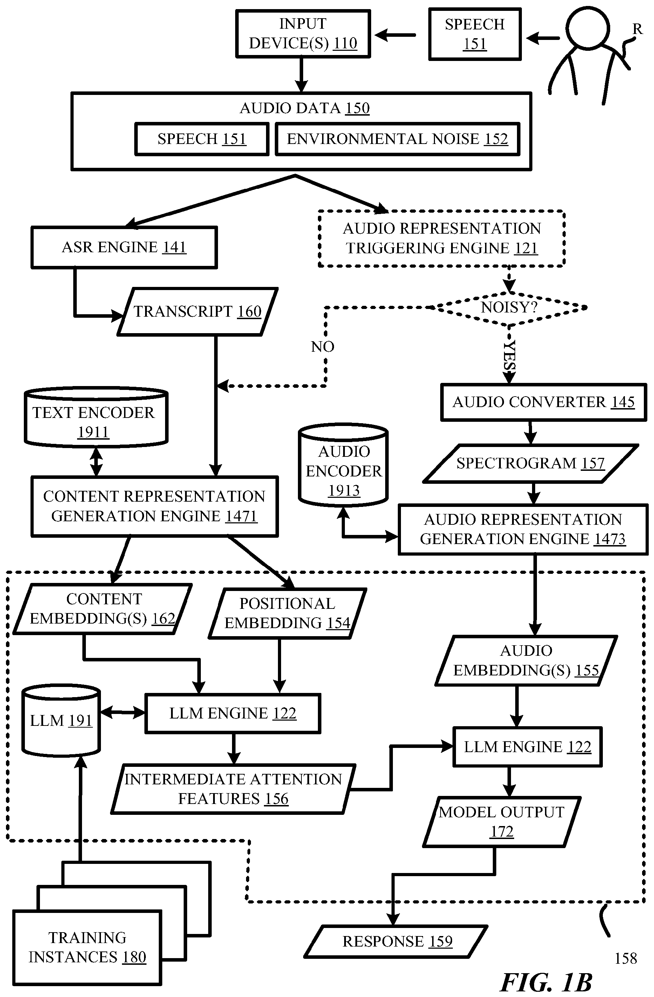

FIG. 1A is a block diagram of an example environment 100 that demonstrates various aspects of the present disclosure, and in which implementations disclosed herein may be implemented. As shown in FIG. 1A, the environment 100 can include a client computing device 10 ("client device"), and a server computing device 12 ("server device") that is in communication with the client computing device 10. In some implementations, the server computing device 12 can be in communication with the client computing device 10 via one or more networks 13. In some implementations, the client computing device 10 and/or the server computing device 12 can be in communication with one or more machine learning (ML) models 19, via the one or more networks 13. The one or more networks 13 can include, for example, a local area network (LAN), a wide area network (WAN) such as the Internet, and/or any other appropriate network. The one or more ML models 19 can include, for instance, a generative model 191 (see FIG. 1B).

In various implementations, the generative model 191 can be a large language model ("LLM") having less than 100 billion parameters, more than 100 billion parameters, or over 200 billion parameters, etc. The greater the number of parameters of an LLM, the more complex (or sophisticated) a task (e.g., specified in a user query or request) the LLM can handle. The LLM may be stored at the client computing device 10, or at the server computing device 12. For instance, if memory of the client computing device 10 restricts the storing of the LLM at the client computing device 10 or if a token length of a user input (or prompt) to be processed using the LLM exceeds a predetermined token length, the LLM may be stored at the server computing device 12. For instance, if the memory of the client computing device 10 does not restrict the storing of the LLM at the client computing device 10, the LLM may be stored at the client computing device 10, to reduce a latency in completing a task (e.g., specified in the user query or request), for instance, by avoiding data communications via the one or more networks 13.

In some implementations, the LLM can be transformer-based and acquired based on fine-tuning a pre-trained LLM. One non-limiting example of the pre-trained LLM is GOOGLE'S Pathways Language Model (PaLM). Another non-limiting example of the pre-trained LLM is GOOGLE'S Language Model for Dialogue Applications (LaMDA).

In some implementations, the client computing device 10 can be, for example, a desktop computing device, a laptop computing device, a tablet computing device, a mobile phone computing device, a computing device of a vehicle (e.g., an in-vehicle entertainment system), an interactive speaker, a smart appliance such as a smart television, and/or a wearable apparatus that includes a computing device (e.g., glasses having a computing device, a smart watch, a virtual or augmented reality computing device), and the present disclosure is not limited thereto.

In some implementations, the client computing device 10 can include one or more applications installed locally at, or otherwise accessible via, the client computing device 10. The one or more applications of the client computing device 10 can include, for instance, an LLM-based assistant 104 (or other chat application) that includes, or otherwise accesses the generative model 191 for performing human-to-user interactions (e.g., to carry out human-to-computer dialogs). In various implementations, the LLM-based assistant 104 includes, or otherwise accesses, a user input engine 101 and/or a rendering engine 102. In some implementations, the client computing device 10 can include a data storage 106. The data storage 106 of the client computing device 10, for instance, can store metadata (e.g., a user profile of a user, etc.) associated with the one or more applications (e.g., 104) and/or associated with the client computing device 10.

The user input engine 101 can be configured to detect user input provided by a user of the client computing device 10. The user input may be provided by the user using one or more user interface input devices, such as a keyboard, a touch screen, a microphone, etc. The user input can be typed input, touch input, audible input, or any other applicable type of input. For example, the client computing device 10 can be equipped with a keyboard to receive typed input, and/or a mouse (or one or more hardware buttons) to receive a user click that selects one or more graphical user interface (GUI) elements that is rendered visually at a user interface of the client computing device 10. Additionally, or alternatively, the client computing device 10 can be equipped with one or more microphones that capture audio data, such as audio data capturing spoken utterances of the user and/or other sounds in an environment of the client computing device 10. Additionally, or alternatively, the client computing device 10 can be equipped with one or more vision components that are configured to capture vision data corresponding to images and/or movements (*e.g*., gestures) detected within a field of view of one or more of the vision components. Additionally, or alternatively, the client computing device 10 can be equipped with one or more touch sensitive components (*e.g*., a stylus, a touch screen, a touch panel, *etc*.) that are configured to capture signal(s) corresponding to touch input that is directed to the client computing device 10.

In various implementations, the rendering engine 102 can be configured to provide content for audible and/or visual presentation to a user of the client computing device 10 using one or more user interface output devices (e.g., display, speaker, etc.). For example, the client computing device 10 can be equipped with one or more speakers that enable content (e.g., "I can hear you saying 'where is the...shop', what shop are you specifically asking for? Sorry, I didn't hear clearly due to dog barking") to be provided for audible presentation to a user of the client computing device 10. Additionally, or alternatively, the client computing device 10 can be equipped with a display or projector that enables content (e.g., "The nearest coffee shop is about 4 min away walking, would you like to check it in the map?") to be provided for visual presentation to the user via the client computing device 10.

In various implementations, the LLM-based assistant 104 can include local components such as an automatic speech recognition (ASR) engine 141 and/or a text-to-speech (TTS) engine 143. Additionally or alternatively, the plurality of local components of the LLM-based assistant 104 can include other component(s) such as an LLM engine 147. It is noted that, in some implementations, the user input engine 101, the rendering engine 102, the ASR engine 141, the TTS engine 143, and/or the LLM engine 147 do not necessarily need to be all included in the LLM-based assistant 104. For instance, the user input engine 101 and/or the rendering engine 102 can be included in the client computing device 10 and be shared across one or more of the applications that are installed at (or accessible via) the client computing device 10. As another example, the ASR engine 141, the TTS engine 143, and/or the LLM engine 147 can each additionally (or alternatively) have a corresponding cloud-based counterpart (e.g., 142, 144, 146, etc.) that is located at, or accessible via, a server (e.g., the server computing device 12 or other server(s)).

In some implementations, a user (e.g., user R) of the client computing device 10 may have a registered account associated with the LLM-based assistant 104 and/or other application(s). The other applications can include, for example, a social media application, a video player, a note-taking application, a shopping application, a messaging application, and/or any other appropriate applications (or services), installed at, or accessible via, the client computing device 10.

In various implementations, the ASR engine 141 can process, using one or more streaming ASR models (e.g., a recurrent neural network (RNN) model, a transformer model, and/or any other type of ML model capable of performing ASR), streams of audio data that capture spoken utterances (also referred to as "voice input", "user speech", etc.), to generate corresponding streams of ASR output. The ML model(s) can be on-device ML models that are stored locally at the client computing device 10, remote ML models that are executed remotely from the server computing device (e.g., at remote server device 12), or shared ML models that are accessible to the client computing device 10 and/or remote systems (e.g., the remote server computing device 12). The audio data can be acquired from audio recordings or can be generated by microphone(s) of the client computing device 10. Notably, the streaming ASR model can be utilized to generate the corresponding streams of ASR output as the streams of audio data are generated.

In some implementations, the corresponding streams of ASR output can include, for example, streams of ASR hypotheses (e.g., term hypotheses and/or transcription hypotheses) that are predicted to correspond to spoken utterance(s) of a user that are captured in the corresponding streams of audio data, one or more corresponding predicted measures (e.g., probabilities, log likelihoods, and/or other values) for each of the ASR hypotheses included in the streams of ASR hypotheses, a plurality of phonemes that are predicted to correspond to spoken utterance(s) of a user that are captured in the corresponding streams of audio data, and/or other ASR output. In some versions of those implementations, the ASR engine 141 can select one or more of the ASR hypotheses as corresponding recognized text ("transcript", "transcription") that corresponds to the spoken utterance(s) (e.g., selected based on the corresponding predicted measures).

In various implementations, the TTS engine 143 can process, using TTS model(s), corresponding streams of textual content (e.g., content generated based at least on processing the recognized text using the LLM, or a predetermined text, etc.), to generate synthesized speech audio data that includes computer-generated synthesized speech. The synthesized speech audio data can be rendered audibly via one or more user interface output devices, such as a speaker. In additional or alternative implementations, the synthesized speech audio data can be pre-cached in memory or in one or more databases accessible by the client computing device 10.

In various implementations, the LLM engine 147 (or the cloud-based LLM engine 146) can be in communication with the aforementioned LLM 191 and/or the ASR engine 141. In various implementations, the LLM 191 can include, or otherwise access, a text encoder 1911 (see FIG. 1B). In some implementations, the LLM engine 147 (or the cloud-based LLM engine 146) can include a content representation generation engine 1471 in communication with the text encoder 1911 and/or the ASR engine 141. For example, the content representation generation engine 1471 can be utilized to process the aforementioned recognized text for the spoken utterance(s), using the text encoder 1911, to generate a text representation (may also be referred to as "content representation", "text embedding", "content embedding(s)" which are labeled as "162" in FIG. 1B, etc.) that encodes semantic meanings of the aforementioned recognized text ("transcript") and/or a positional embedding (e.g., 154 in FIG. 1B) that encodes relative positions between words or tokens in the recognized text. A "token" refers to a unit of text data for processing using the generative model 191, and can correspond to a word, one or more characters of a word, etc. In some implementations, a token can include not only character(s) but also punctuation(s), space(s), and/or emojis.

In some implementations, the text representation can be, or can include, one or more text embeddings that encode word content of the recognized text. Each text embedding can be, for instance, in the form of an N-dimensional numerical vector (e.g., [0.0012567..., - 0.2368598...,...,...]) storing a total number of N floating point numbers, where N can be in the order of hundreds, thousands, etc. The N-dimensional numerical vector can be a token representation of one or more tokens, in a latent space, that belongs to the recognized text. In some implementations, a positional embedding (also in the format of a numerical vector) can be generated based on relative positions of the tokens in the plurality of tokens, so as to encode/reflect the relative positions between the tokens in the recognized text.

In various implementations, the LLM 191 can include, or otherwise access, an audio encoder 1913 (see FIG. 1B). In some implementations, additionally, or alternatively, the LLM engine 147 can include an audio representation generation engine 1473 in communication with the audio encoder 1913 and/or an audio converter 145. The audio converter 145 can be applied to convert the aforementioned audio data that captures the spoken utterance(s) into a spectrogram (e.g., mel type). The audio representation generation engine 1473 can be utilized to process the spectrogram, using the audio encoder 1913, to generate an audio representation (e.g., audio embedding(s) 155) that encodes acoustic features of the audio data that captures the spoken utterance(s).

In some implementations, the text encoder 1911 can be acquired based on fine tuning a pre-trained text encoder. The acquired text encoder 1911 can include an embedding layer that converts the recognized text into one or more text embeddings (e.g., in the format of numerical vectors) in a latent space. In some implementations, the audio encoder 1913 can be acquired based on fine tuning a pre-trained audio encoder. In some implementations, for instance, the audio encoder 1913 can be a massively large convolutional neural network with an embedding head. In this case, the audio encoder can be fine-tuned such that the embedding head fully summarizes audio semantics of audio data that is provided to the audio encoder.

In various implementations, the server computing device 12 can be, for example, a web server, one or more blade servers acting together to provide "cloud" infrastructure, or any other type of server as needed. In various implementations, optionally, the server computing device 12 can include an audio representation triggering engine 121, and/or a data storage 126. For instance, the audio representation triggering engine 121 can be (but does not necessarily need to be) included in the cloud-based LLM engine 146. In some implementations, the audio representation triggering engine 121 can be in communication with the audio representation generation engine 1473, and/or the audio encoder 1913. The audio representation triggering engine 121 can be applied to determine whether an environment in which the audio data capturing the spoken utterance(s) is so noisy that the audio encoder 1913 needs to be triggered for helping formulate a response for the spoken utterance(s). It is noted that, in some implementations, the audio representation triggering engine 121 can be omitted. In other words, in some implementations, the audio data 150, whether noisy or not noisy, is processed to generate the audio representation, e.g., the audio embeddings 155 (as seen in FIG. 1B). This can ensure that a response formulated in response to audible user input can relatively accurately reflect a user intent of a user that provides the audible user input, even in situations where an accuracy of speech recognition of the audible user input is negatively impacted by noises that are present in an environment of the user.

In some implementations, in response to determining that the environment in which the audio data capturing the spoken utterance(s) is noisy, the audio representation triggering engine 121 can trigger the audio representation generation engine 1473 to provide the spectrogram (e.g., 157 in FIG. 1B) of the audio data capturing the spoken utterance(s) to the audio encoder 1913, for the audio data to be processed using the audio encoder 1913 (to generate the aforementioned audio representation). In some implementations, in response to determining that the environment in which the audio data capturing the spoken utterance(s) is not noisy, the audio representation triggering engine 121 may not trigger the audio representation generation engine 1473. In this case, the audio representation generation engine 1473 may not be activated, and the audio encoder 1913 may not be accessed to generate the audio representation. This way, computational resources associated with activation of the audio representation generation engine 1473 and running of the audio encoder 1913 (e.g., processing the audio data using the audio encoder 1913, etc.) may be avoided when the audio representation triggering engine 121 detects no noise or a low noise within an environment associated with the spoken utterance(s).

In some implementations, the audio representation triggering engine 121 determines whether the environment in which the audio data capturing the spoken utterance(s) is noisy based on one or more factors. The one or more factors include, for instance, a distance between the client computing device 10 that receives the audio data capturing the spoken utterance(s) and a user that provides the spoken utterance(s). In some implementations, the audio representation triggering engine 121 determines that the environment in which the audio data capturing the spoken utterance(s) is noisy based on the distance (between the client computing device 10 and the user) being greater than a predefined distance threshold. The audio representation triggering engine 121 can determine that the environment in which the audio data capturing the spoken utterance(s) is not noisy based on the distance not being greater than the predefined distance threshold (e.g., an upper limit for distance values).

In some implementations, the one or more factors can, additionally, or alternatively, include a signal-to-noise ratio (SNR) determined for the audio data capturing the spoken utterance(s). In this case, the audio representation triggering engine 121 can determine that the environment in which the audio data capturing the spoken utterance(s) is noisy based on the SNR being lower than a predefined SNR threshold (e.g., a lower limit for SNR values). The audio representation triggering engine 121 can determine that the environment in which the audio data capturing the spoken utterance(s) is not noisy based on the SNR not being lower than the predefined SNR lower limit.

In some implementations, the audio representation triggering engine 121 can determine that the environment in which the audio data capturing the spoken utterance(s) is noisy based on the one or more factors all satisfying corresponding predefined conditions (e.g., the aforementioned distance being greater than the predefined distance threshold and the aforementioned SNR being lower than the predefined SNR lower limit). In some other implementations, the audio representation triggering engine 121 can determine that the environment in which the audio data capturing the spoken utterance(s) is noisy based on one or more of the factors satisfying corresponding predefined conditions (e.g., the aforementioned distance being greater than the predefined distance threshold, or the aforementioned SNR being lower than the predefined SNR threshold).

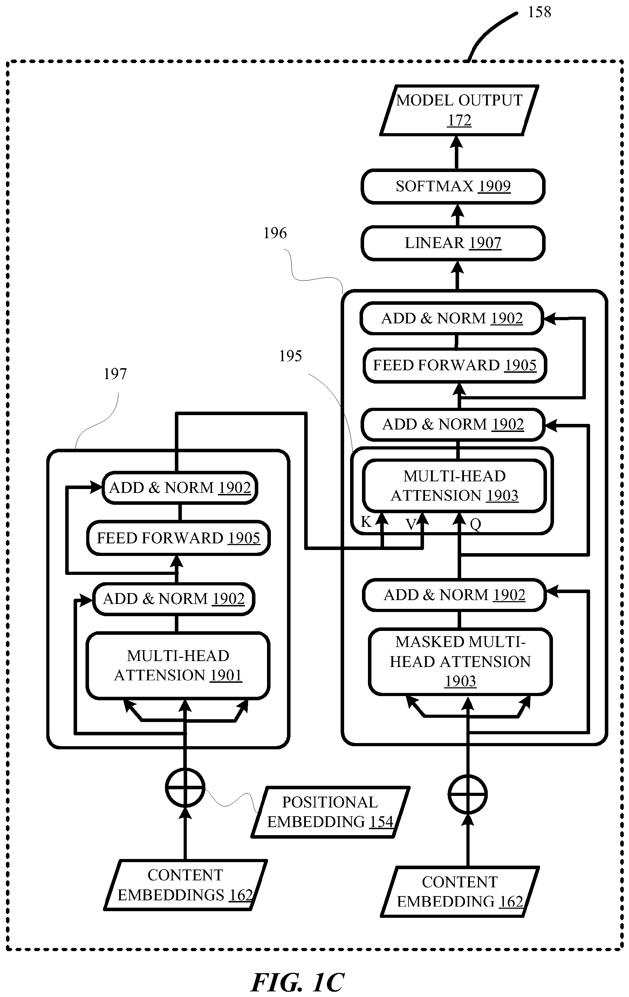

In some implementations, referring to FIG. 1C, the LLM 191 can include a transformer decoder 196 to referred to as "decoder portion", "LLM decoder", or simply as "decoder") having one or more decoder sub-networks (e.g., each including a decoder self-attention sub-layers 1903). Additionally, the LLM 191 can include a transformer encoder 197 (also referred to as "encoder portion", "LLM encoder", or simply as "encoder") having one or more encoder sub-networks (e.g., each including an encoder self-attention sub-layer 1901). In some implementations, the encoder self-attention sub-layer 1901 can be the same as, or similar to the decoder self-attention sub-layers 1903.

The decoder self-attention sub-layers 1903 (or the encoder self-attention sub-layer 1901) can include a multi-head attention mechanism (may be referred to shortly as "multi-head attention") having multiple attention heads. Each of the multiple attention heads in the multi-head attention mechanism of the transformer decoder 1976(or the transformer encoder 197) can be, for instance, a single attention head including a query matrix, a key matrix, and a value matrix.

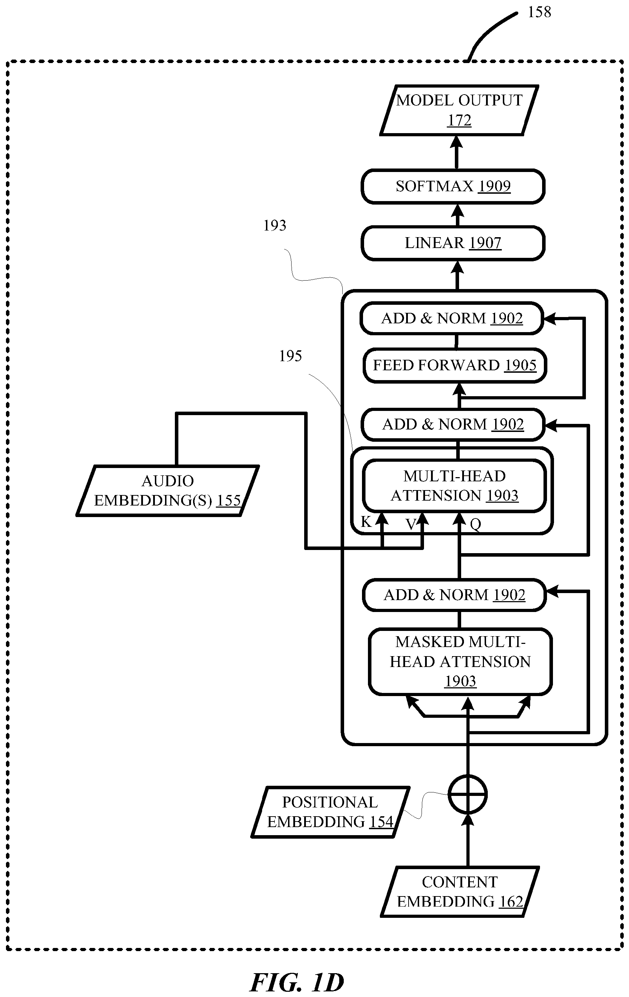

In some implementations, referring to FIG. 1C, one or more multi-head attentions in the transformer decoder 196 (may also be referred to as "decoder portion" of the generative model 191) can be a cross-attention (e.g., 195) that connects the transformer encoder 197 (also referred to as "encoder portion" of the generative model 191) with the transformer decoder 196. In some implementations, referring to FIG. 1D, the cross-attention 195 can be utilized to combine asymmetrically two separate embeddings that correspond to different modalities (e.g., an audio embedding and an intermediate output embedding derived from a text embedding).

In some implementations, referring back to FIG. 1C, the aforementioned text embedding(s) and the positional embedding can be combined into a combined embedding, and the combined embedding can be provided to an encoder self-attention sub-layer (also referred to as "multi-head attention", see 1901 in FIG. 1C) of a first encoder sub-network of the LLM 191. The encoder self-attention sub-layer can be configured to apply an attention mechanism (e.g., a multi-head attention mechanism) to the combined embedding, to generate one or more encoder self-attention sub-layer outputs. The attention mechanism can be implemented, for instance, via one or more matrix multiplications (e.g., using a query matrix, a value matrix, and a key matrix). In some implementations, the first encoder sub-network of the LLM 191 (e.g., the encoder portion 197 of the LLM 191) can further include a connection layer and a normalization layer (collectively referred to as "add&norm layer"). The connection layer can combine the one or more encoder self-attention sub-layer outputs, to generate a combined encoder self-attention sub-layer output. The normalization layer can normalize the combined encoder self-attention sub-layer output, to generate a first encoder output.

It is noted that, while the transformer encoder 197 of the LLM 191 in FIG. 1C is illustrated to include one encoder sub-network, the total number of the encoder sub-networks included in the transformer encoder 197 can be, two, three, or more, and the present disclosure is noted limited thereto. In case there are more than one encoder sub-network, the aforementioned first encoder output will not be a final encoder output, and will be processed by additional encoder sub-network(s) each having an encoder self-attention sub-layer, to generate the final encoder output.

In some implementations, the transformer decoder 196 of the LLM 191 can include one or more decoder sub-networks (each having a decoder self-attention sub-layer 1903 and/or "add&norm layer 1902"), a linear layer (e.g., 1907 in FIG. 1C), and/or a softmax layer (e.g., 1909 in FIG. 1C). The final encoder output from a last encoder self-attention sub-layer of the transformer encoder 197 and/or an additional combined embedding from a previous time step at the transformer decoder 196, can be processed using a first decoder sub-network, to generate one or more decoder self-attention sub-layer outputs. The one or more decoder self-attention sub-layer outputs of the first decoder sub-network can be combined and normalized by an additional add&norm layer (the same as or similar to descriptions above), to generate a first decoder output. Optionally, the first decoder output can be processed using additional decoder sub-network(s), if there is any, to generate a final decoder output. The final decoder output can be processed using a feed-forward layer (1905 in FIG. 1C) and/or a further add&norm layers. The feed-forward layer can be configured to operate on each position of a user input in a sequence of user inputs (e.g., by applying a sequence of transformations), to generate an output for the position.

The linear layer can be configured to apply a learned linear transformation to an output from the last decoder sub-network of the decoder 196 of the LLM 191, to project such output into an appropriate space for processing by the softmax layer. The softmax layer can be configured to generate a probability distribution ("model output") over a plurality of possible outputs at each time step. Based on the probability distribution, a possible output having a highest probability can be selected from the plurality of possible outputs, to generate a portion of a response for the spoken utterance(s).

FIG. 1B illustrates an example process flow of generating a response using a user interactive system in accordance with various aspects of the present disclosure. As shown in FIG. 1B, during a human-to-computer dialog, a user can provide a speech 151 to the LLM-based assistant 104 that is accessible via the client device 10 (e.g., a stand-alone speaker, a laptop, etc.). One or more input devices 110 (e.g., microphone(s)) of the client device 10 can receive audio data 150 capturing the speech 151. It is noted that, in various implementations, the audio data 150 can capture one or more environmental noises 152 in addition to the speech 151. The one or more environmental noises 152 may, or may not, impact accuracy of a speech recognition (also referred to as "transcript" or "transcription") of the speech 151.

In some implementations, in response to receiving the audio data capturing the speech 151, the audio data 150 capturing the speech 151 can be provided to the ASR engine 141 and/or the audio representation triggering engine 121. The ASR engine 141 can, as described above, process the audio data 150 that captures the speech 151, using one or more ASR models, to generate a transcript 160 of the speech 151. The transcript 160 of the speech 151 may include accurate content of the speech 151 in a low noise or noise free environment, or may include inaccurate content due to a noisy environment (e.g., the environmental noise 152). In some implementations, the audio representation triggering engine 121 can, as described above, determine whether an environment of the audio data 150 is noisy such that the audio encoder 1913 needs to be triggered for formulating a response responsive to the spoken speech 151.

For example, as shown in FIG. 1B, the audio representation triggering engine 121 can determine that the environment of the audio data 150 is noisy so that the audio encoder 1913 needs to be triggered for formulating a response for the spoken speech 151. In this case, the audio representation triggering engine 121 can provide the audio data 150 to the audio converter 145, where the audio converter 145 converts the audio data 150 into a spectrogram 153 (e.g., mel type). The spectrogram 153 can then be provided to the audio representation generation engine 1473 that is in communication with the audio encoder 1913. The audio representation generation engine 1473 can process the spectrogram 153, using the audio encoder 1913, to generate one or more audio embeddings 155 that represent acoustic features of the audio data 150 that captures the speech 151. In some implementations, if the audio representation triggering engine 121 determines that the environment of the audio data 150 is not noisy enough to trigger the audio encoder 1913, the audio representation triggering engine 121 may not be invoked and/or may not initiate communication(s) with the audio encoder 1913 to generate the one or more audio embeddings 155.

In some implementations, it is noted that, the audio representation triggering engine 121 can be omitted, and the audio data 150 can be provided to the audio converter 145 for subsequent processing as described above.

In various implementations, the transcript 160 of the speech 151 can be processed, using the text encoder 1911, to generate one or more text embeddings 162 (may also be referred to as "content embedding(s)") that represents semantic meanings (e.g., word semantics) of the transcript 160 and/or a positional embedding 154. The one or more text embeddings 162 can be generated based on the transcript 160 using the text encoder 1911, whether or not the audio representation triggering engine 121 determines the environment of the audio data 150 is noisy. However, it is noted that, the transcript 160 of the speech 151 may be different from actual content of the speech 151 if the environment of the audio data 150 is noisy. In this case, the transcript 160 can be considered as a mis-transcription, and the audio representation triggering engine 121 therefore provides an approach to remedy possible inaccuracy in the transcript 150 of the speech 151 caused by the environmental noise 152. This reduces the chance that an inappropriate response is generated and rendered in response to the speech 151.

In various implementations, the one or more text embeddings 162 can be provided to the generative model 191. The one or more text embeddings 162 and/or a positional embedding 154 can be processed by the LLM engine 122 using the generative model 191, to generate intermediate attention features 156, where the intermediate attention features 156 can be interleaved with the one or more audio embeddings 155, to be provided to a multi-head attention layer (e.g., a cross-attention layer/mechanism, see 195 in FIG. 1D) of the generative model 191 (e.g., an LLM). A model output 172 of the generative model 191 can be applied to derive a response 159 to be rendered in response to receiving the speech 151. The response 159 can be rendered audibly, and/or visually.

A more detailed view of a process 158 that shows the processing of the one or more text embeddings 162 and the one or more audio embeddings 155, using the LLM 191, to generate the model output 172 can be found in FIG. 1D. In some implementations, referring to FIG. 1D, the LLM 191 can include a decoder 196 having one or more decoder sub-networks (e.g., each including a decoder self-attention sub-layers 1903). In some implementations, the combined embedding (that combines the text embedding(s) 162 and the positional embedding 154) can be provided to a decoder self-attention sub-layer (labeled "multi-head attention") 1903 of a first decoder sub-network of the LLM 191. The decoder self-attention sub-layer 1903 can be configured to apply an attention mechanism (e.g., a multi-head attention mechanism) to the combined embedding, to generate one or more decoder self-attention sub-layer outputs. The attention mechanism can be implemented, for instance, via one or more matrix multiplications (e.g., using the query matrix, the key matrix, and the value matrix). In some implementations, the first decoder sub-network of the LLM 191 can further include a connection layer and a normalization layer (collected referred to as "add&norm 1902"). The connection layer can combine the one or more decoder self-attention sub-layer outputs, to generate a combined decoder self-attention sub-layer output. The normalization layer can normalize the combined decoder self-attention sub-layer output, to generate a first decoder output.

Further referring to FIG. 1D, the first decoder output (e.g., intermediate attention features in the format of numerical vector(s)) can be processed by additional decoder self-attention sub-layer 1903, along with the audio embedding(s) 155. As shown in FIG. 1D, the additional decoder self-attention sub-layer 1903 can be a cross-attention mechanism denoted as 195. In some implementations, the cross-attention mechanism 195 can have the same query matrix, key matrix, and value matrix as other self-attention sub-layers (such as 1903 in FIG. 1D, and/or 1901 in FIG. 1C).

In some implementations, unlike the other multi-head attention mechanism(s), the cross-attention mechanism 195 maps the aforementioned intermediate attention features (e.g., computed based on processing of the text/content embedding(s) 162) to "Queries" (in the form of matrix) based on multiplying the intermediate attention features with the query matrix, and maps the audio embedding(s) into "Keys" (in the form of matrix) and "Values" (in the form of matrix) based on multiplying the audio embedding(s) with the key matrix and the value matrix, respectively. In some implementations, dot products can be acquired based on multiplying the "Queries" (in the form of matrix) and "Keys" (in the form of a traversed matrix). In some implementations, the dot products can each be divided by a scaling factor, and a softmax function (e.g., 1909) can be applied over the scaled dot products, to acquire weights for the "Values" matrix. The acquired weights (in the form of matrix) can be multiplied with the "Values" (in the form of matrix) to compute the model output 172, e.g., as a weighted sum of the "Values" in accordance with the acquired weights.

In some implementations, the decoder of the LLM 191 can include one or more decoder sub-networks 1903, a linear layer 1907, and/or a softmax layer 1909. The final decoder output can be processed using a feed-forward layer 1905 and/or a further add&norm layers 1902. The feed-forward layer 1905 can be configured to operate on each position of a token in the transcript 160 (e.g., by applying a sequence of transformations), to generate an output for the position.

The linear layer 1907 can be configured to apply a learned linear transformation to an output from the last decoder sub-network of the decoder 196 of the LLM 191, to project such output into an appropriate space for processing by the softmax layer 1909. The softmax layer 1909 can be configured to generate a probability distribution ("model output 172") over a plurality of possible outputs at each time step. Based on the model output 172 (e.g., the probability distribution), a possible output having a highest probability can be selected from the plurality of possible outputs, to generate the response 159. The response 143 can be rendered responsive to the speech 151.

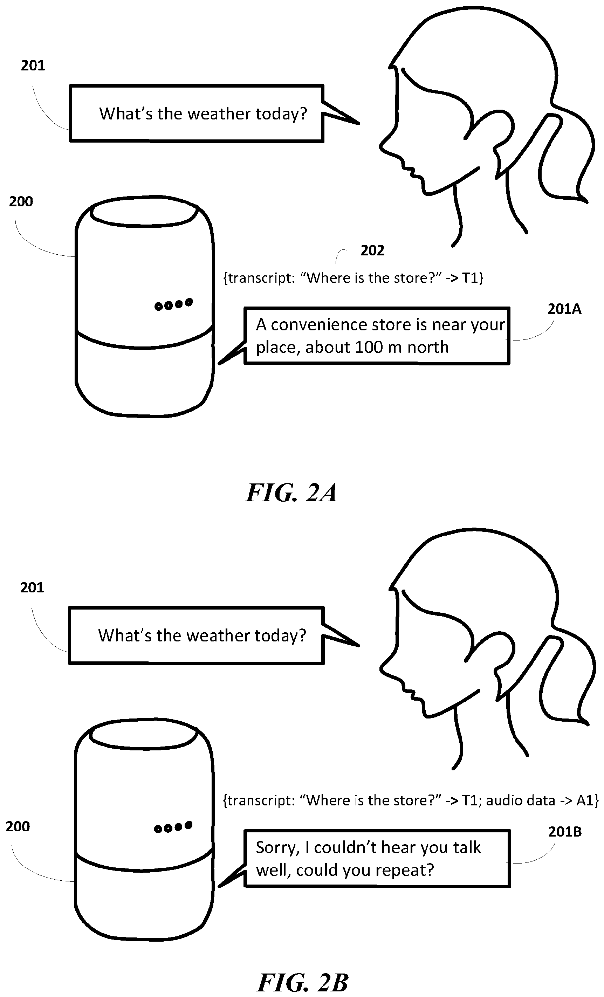

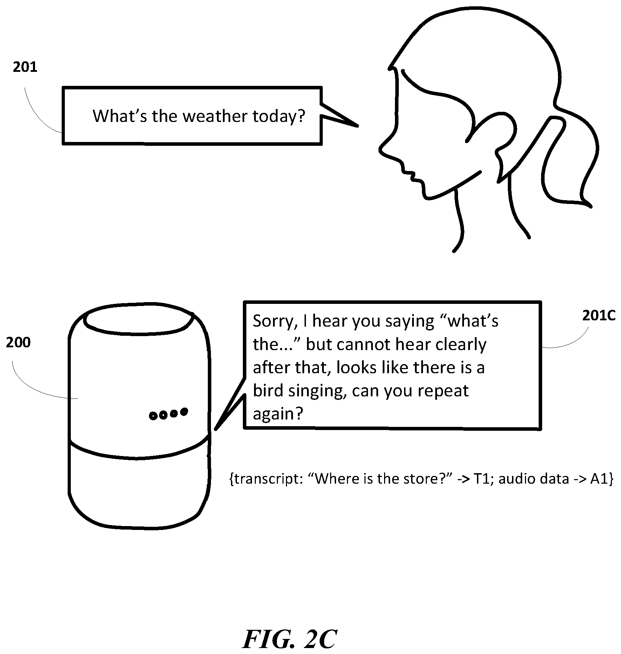

FIG. 2A depicts a scenario of human-to-computer interactions without utilizing an audio encoder and a cross-attention mechanism, in accordance with various aspects of the present disclosure. FIG. 2B depicts a scenario of human-to-computer interactions utilizing an audio encoder and a cross-attention mechanism, in accordance with various aspects of the present disclosure. FIG. 2C depicts another scenario of human-to-computer interactions utilizing an audio encoder and a cross-attention mechanism, in accordance with various aspects of the present disclosure.

As shown in FIG. 2A, a user may provide a user utterance 201 of "What's the weather today?" to an automated assistant (e.g., the LLM-based assistant 104 in FIG. 1A) client device 200 (the same as or similar to the client computing device 10). In case the user utterance 201 is provided in a noisy environment, an ASR engine of the client device 200 may mistranscribe the user utterance 201 and generate an incorrect transcript 202 such as "Where's the store?". Such incorrect transcript 202 may or may not be provided/rendered to the user. For instance, in case the client device 200 does not include a display for visually rendering the incorrect transcript 202, the user may not know that the client device 200 misunderstands the user utterance 201.

Without utilizing the audio encoder as described above, the LLM-based assistant 104 may generate a text embedding T1 that represents semantic meanings of the incorrect transcript 202, and generate a response 201A based on processing of the text embedding T1 (and/or positional embeddings associated with T1, as described previously). As shown in FIG. 2A, the response 201A can be "A convenience store is near your place, about 100 m north". Such response 201A, if rendered in response to the user utterance 201 "What's the weather today?", may cause confusion (as the user is asking "what's the weather" instead of "where's the store") and an elongated human-to-computer dialog (due to additional user input(s), which results in a waste of computational resources and other costs.

To remedy this, as shown in FIG. 2B, the audio encoder (as shown in FIG. 1B) and/or a cross-attention mechanism (as shown in FIG. 1D) can be utilized. The audio encoder and the cross-attention mechanism can be applied, for instance, if a noisy environment of the user utterance 201 is detected. The audio encoder and the cross-attention mechanism may also be applied regardless of whether an environment of the user utterance 201 is noisy or not noisy.

When the audio encoder is utilized, the LLM-based assistant 104 not only generates the text embedding T1 that represents semantic meanings of the incorrect transcript 202, but also generates one or more audio embeddings A1 to formulate a response responsive to the user utterance 201. For example, the LLM-based assistant 104 can generate a different response 201B based on processing of the text embedding T1 interleaved with the one or more audio embeddings A1. The different response 201B, for instance, can be "Sorry, I couldn't hear you talk well, could you repeat?". It is noted that while, the transcript (e.g., "Where is the store?)" "T1", and "A1", etc. are illustrated in FIGS. 2A~2C, these are provided for illustrative purposes (e.g., to illustrate generation of the different responses 201A~201C) and may not be intended to be actually rendered to the user of the user utterance 201.

Optionally, based on training instances (e.g., 180 in FIG. 1B) used to fine-tune a pre-trained LLM to acquire the LLM (e.g., 191 in FIG. 1B) that the LLM-based assistant 104 utilizes to generate responses, given the same text embedding T1 and the same audio embeddings A1, differently fine-tuned LLMs can provide different responses. For instance, LLM utilized by the LLM-based assistant 104 to generate the response 201C (see FIG. 2C) can be fine-tuned using different training instances than the LLM utilized by the LLM-based assistant 104 (which generates the response 201B). As a result, the response 201C can be different from the response 201B. For example, the response 201C can be "Sorry, I hear you saying 'What's the...', but cannot hear clearly after that, looks like there is a bird singing, can you repeat again?" In other words, based on the fine-tuning of the LLM 191 (e.g., the audio encoder 1913 in FIG. 1B and/or the transformer decoder, etc.), the response generated using the LLM 191 can identify a specific portion of the user utterance that is unclear due to a noise, and/or can identify a specific source (e.g., bird singing) of the noise. For instance, the audio encoder can be fine-tuned to generate audio embedding(s) indicating a source of the noise in the audio data that captures the user utterance. In this case, the response (e.g., 201C) generated by an LLM (e.g., 191 having such fine-tuned audio encoder) can identify a source of the noise in the audio data that captures the user utterance (e.g., 201).

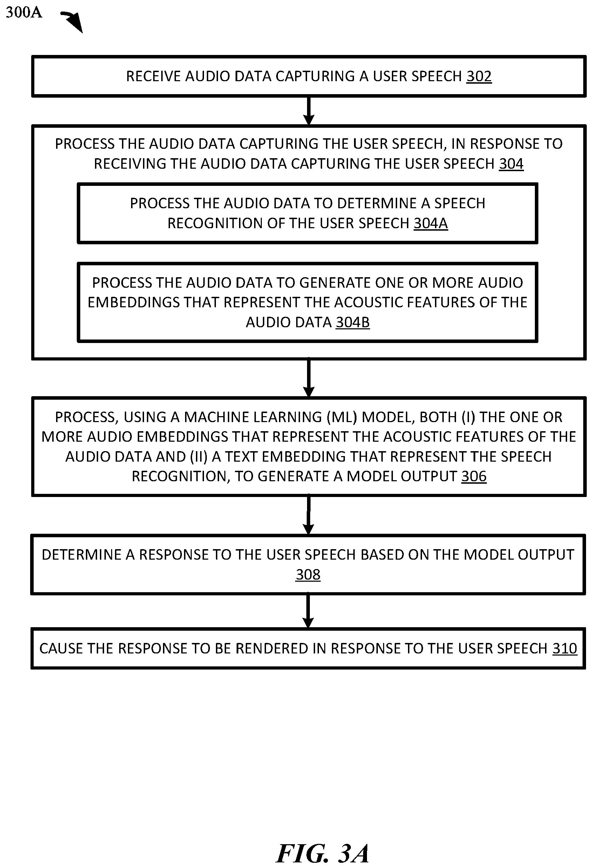

Turning now to FIG. 3A, a flowchart illustrating an example scenario 300 of evaluating a user query is provided, in accordance with various aspects of the present disclosure. A system for performing the method 300A includes one or more processors, memory, and/or other component(s) of computing device(s) (e.g., client computing device 10 of FIG. 1A, one or more servers such as 12 in FIG. 1A, and/or other computing devices). Moreover, while operations of the method 300A are shown in a particular order, this is not meant to be limiting. One or more operations may be reordered, omitted, and/or added. The system, for instance, can be a user interaction system. The user interaction system can include a chat application having, or otherwise accesses, an LLM-based assistant as described above. The chat application can be installed at, or otherwise accessed via a client device (e.g., laptop, stand-alone speaker, etc.) having one or more user input devices (e.g., microphone(s)) and/or one or more user output devices (e.g., speaker(s)).

In various implementations, at block 302, the system receives audio data capturing a user speech. In some implementations, the audio data capturing the user speech can be noisy in situations where the user speech is captured by one or more microphones of the client device (e.g., laptop) in a noisy environment (e.g., having one or more sources of noises, such as flight landing, bird singing, dog barking, etc.).

In various implementations, at block 304, the system processes the audio data capturing the user speech, in response to receiving the audio data capturing the user speech. In various implementations, at block 304A, the system processes the audio data to determine a speech recognition of the user speech. Additionally, or optionally, in various implementations, at block 304B, the system processes the audio data to generate one or more audio embeddings that represent the acoustic features of the audio data. In some implementations, the system generates the one or more audio embeddings based on processing the audio data using an audio encoder. The one or more audio embeddings can each be a numerical vector in a latent space, and the audio encoder can be a convolutional neural network ("CNN") with an embedding head that converts/maps acoustic features of the audio data to the one or more audio embeddings in the latent space. In some implementations, the audio encoder can be fine-tuned such that the embedding head fully summarizes audio semantics of the audio data it receives.

In various implementations, at block 306, the system processes, using a machine learning (ML) model, both (i) the one or more audio embeddings that represent the acoustic features of the audio data and (ii) a text embedding that represents the speech recognition, to generate a model output. In various implementations, at block 308, the system determines a response to the user speech based on the model output.

In some implementations, the text embedding can be acquired based on processing the speech recognition using a text encoder. In some implementations, the text embedding can be in the format of a numerical vector, and the text encoder can be an additional convolutional neural network ("CNN") with an embedding head that converts/maps content features of the speech recognition to the text embedding in the latent space.

In some implementations, the ML model can be a transformer-based large language model ("LLM"). As a non-limiting example, the ML model can include a transformer decoder. The transformer decoder can include one or more multi-head attention mechanisms ("multi-head attentions"), where each multi-head attention mechanism can include multiple attention heads. In this example, each attention head can include, for instance, a query matrix, a key matrix, and a value matrix paired with the key matrix.

Continuing with the non-limiting example above, the system can process the one or more audio embeddings (derived from the audio data of the user speech) and the text embedding (derived from the speech recognition of the user speech) by: processing the text embedding using at least one multi-head attention mechanism of the transformer decoder, to generate intermediate attention features; processing the one or more audio embeddings and the intermediate attention features, using a cross-attention mechanism of the transformer decoder, to generate cross-attention features; and processing the cross-attention features, using one or more additional layers (e.g., additional multi-head attention mechanism(s), a linear layer as described previously, etc.) of the transformer decoder, to generate the model output from which the response is derived.

In some implementations, the intermediate attention features can be in the format of numeric vector(s). In some implementations, processing the one or more audio embeddings and the intermediate attention features using the cross-attention mechanism of the transformer decoder can include: multiplying the one or more audio embeddings with the key matrix to acquire "Keys" in the format of matrix, multiplying the one or more audio embeddings with the value matrix to acquire "Values" in the format of matrix, and multiplying the text embedding with the query matrix to acquire "Queries" in the format of matrix.

In some implementations, processing the one or more audio embeddings and the intermediate attention features using the cross-attention mechanism of the transformer decoder can further include multiplying the matrix representing "Queries" with a traversed matrix representing "Keys" to acquire an attention matrix, applying a softmax function to the attention matrix to acquire weights for each value in the "Values" matrix; and computing the model output based on multiplying the "Values" (which is in the format of matrix) with the acquired weights (in the format of matrix).

In some implementations, optionally, the ML model can additionally include a transformer encoder as described in FIG. 1C. The transformer encoder can include one or more multi-head attention mechanisms ("multi-head attentions"), where each multi-head attention mechanism can include multiple attention heads.

In various implementations, at block 310, the system causes the response to be rendered in response to the user speech. In some implementations, the response can be rendered visually via a display of the client device. In some implementations, additionally or alternatively, the response can be rendered audibly via one or more speakers of the client device. In some implementations, the speech recognition (also referred to as "transcript" or "transcription") of the user speech can be a mistranscription, and the response can be responsive to the user speech (or a portion thereof) but not responsive to the mistranscription. For instance, the response can include a first portion of the user speech recognized by an ASR engine and include a request for a user of the user speech to repeat a second portion of the user speech that corresponds to occurrence of one or more sources of noises in the audio data that captures the user speech. Such response can be made possible by fine-tuning the ML model using one or more training instances as described elsewhere in this disclosure.

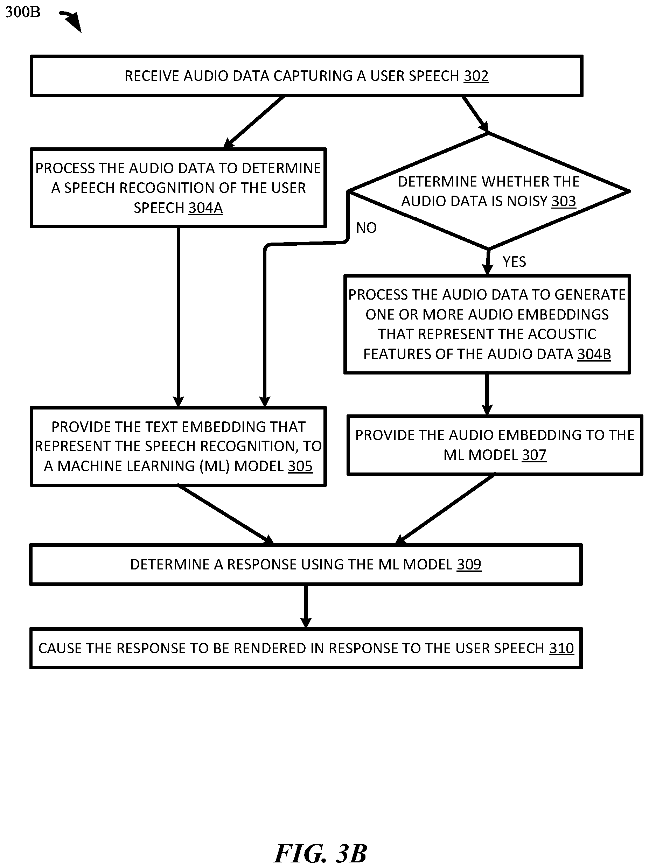

Turning now to FIG. 3B, a flowchart illustrating an example scenario 300B of evaluating a user query is provided, in accordance with various aspects of the present disclosure. A system for performing the method 300A includes one or more processors, memory, and/or other component(s) of computing device(s) (e.g., client computing device 10 of FIG. 1A, one or more servers such as 12 in FIG. 1A, and/or other computing devices). Moreover, while operations of the method 300A are shown in a particular order, this is not meant to be limiting. One or more operations may be reordered, omitted, and/or added.

In various implementations, at block 302, the system receives audio data capturing a user speech. In various implementations, at block 304A, the system processes the audio data to determine a speech recognition of the user speech. Additionally, or optionally, in various implementations, at block 303, the system determines whether the audio data is noisy.

In various implementations, at block 304B, in response to determining that the audio data is noisy, the system processes the audio data to generate one or more audio embeddings that represent the acoustic features of the audio data (which may reflect a noise level, a source of noise(s), etc.). In various implementations, at block 307, the generated audio embeddings can be provided to a machine learning (ML) model.

In various implementations, at block 305, the speech recognition at block 304A can be processed using a text encoder, to generate a text embedding that represents word semantics of the speech recognition of the user speech, where the text embedding can be provided to the ML model.

In various implementations, at block 309, the system can determine a response based on the text embedding and/or the audio embedding(s), using the ML model. In various implementations, at block 310, the system can cause the response to be rendered visually and/or audibly.

Optionally, in some implementations, the system determines that the audio data capturing the user speech is noisy by determining that a signal-to-noise ratio (SNR) for the audio data does not satisfy a SNR threshold.

In various implementations, the system processes the audio data to generate one or more audio embeddings by: processing the audio data to generate a spectrogram from the audio data capturing the user speech, processing the spectrogram to extract spectrogram features corresponding to the audio data, and processing the spectrogram features to generate the one or more audio embeddings. In various implementations, the system processes the spectrogram features, using an audio encoder, to generate the one or more audio embeddings.

In various implementations, the ML model is a transformer-based large language model (LLM).

In various implementations, the system processes the one or more audio embeddings and the text embedding by: interleaving the one or more audio embeddings with intermediate attention features computed by a transformer decoder of the LLM using the text embedding, and providing the interleaved one or more audio embeddings and the intermediate attention features to a multi-head attention of the LLM.

In various implementations, the speech recognition of the user speech is a misrecognition, and the response is responsive to the user speech but is not responsive to the misrecognition.

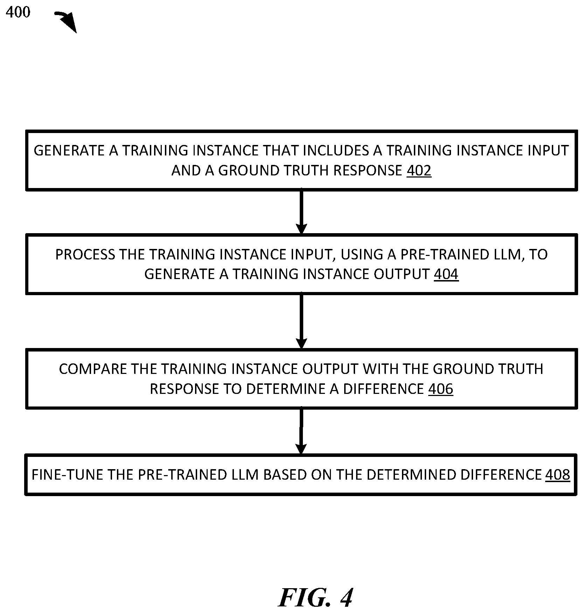

Turning now to FIG. 4, a flowchart illustrating an example method of fine-tuning a pre-trained LLM is provided, in accordance with various aspects of the present disclosure. A system for performing the method 400 includes one or more processors, memory, and/or other component(s) of computing device(s) (e.g., client computing device 10 of FIG. 1A, one or more servers such as 12 in FIG. 1A, and/or other computing devices). Moreover, while operations of the method 400 are shown in a particular order, this is not meant to be limiting. One or more operations may be reordered, omitted, and/or added.

At block 402, the system generates a training instance that includes a training instance input and a ground truth response. The training instance input, for instance, can include noisy audio data capturing a user speech. In some implementations, the system can generate more than one training instance (e.g., multiple training instances). Different training instances can include different noisy audio data as training instance input. The different noisy audio data can capture different user speeches and/or different noises (bird singing, dog barking, flight landing, etc.) In some implementations, the multiple training instances can include one or more training instances having clean audio data (e.g., without noise or with a low level of noise) as training instance input.

In various implementations, the ground truth response can be manually curated based on actual content of the user speech in the training instance input, a speech recognition of the user speech recognized using an ASR engine, and/or other factors (e.g., a source of noises in the audio data that captures the user speech, a noise level of the noises in the audio data that captures the user speech, etc.)

At block 404, the system processes the training instance input, using a pre-trained LLM, to generate a training instance output. At block 406, the system compares the training instance output with the ground truth response, to determine a difference. At block 408, the system fine-tunes the pre-trained LLM based on the determined difference.

It is noted that, while the system can train the pre-trained LLM using supervised learning as described above, the pre-trained LLM can also be fine-tuned using other approaches, such as reinforcement learning from human feedback ("RLHF"). The RLHF incorporates human feedback into the training or fine-tuning of an LLM (e.g., the pre-trained LLM) to align output of the LLM with human preferences. This can be implemented using a reward model trained based on human feedback. For instance, for a given user input and a plurality of responses responsive to the given user input, a human reviewer can indicate a preference (e.g., in the form of a scalar score) for each of the plurality of responses. In other words, the plurality of response for the given user input can be ranked in an order from highest human preference (indicated by a highest scalar score) to lowest human preference (indicated by a lowest scalar score). In some implementations, the scalar scores assigned by the human reviewer to the plurality of responses for the given user input can satisfy a Gaussian distribution with an average value of approximately "0", where the scalar score(s) for response(s) of higher human preference should be positive and increase with the increasing of human preference and the scalar score(s) for response(s) of lower human preference should be negative and decreases with the decreasing of human preference.

The scalar score can be applied as a reward in the RLHF process, where a large value of the scalar score indicates a higher quality of a corresponding response more preferred by the human reviewer and a lower value of the scalar score indicates a higher quality of a corresponding response that is less preferred by the human reviewer. In some implementations, such given user input and the plurality of responses responsive to the given user input can be stored in the data storage 106 (or the storage 129) as one instance for training the reward model. In some implementations, a small quantity of instances can be curated and/or stored in a data storage (e.g., 106 or 129), to train the reward model.

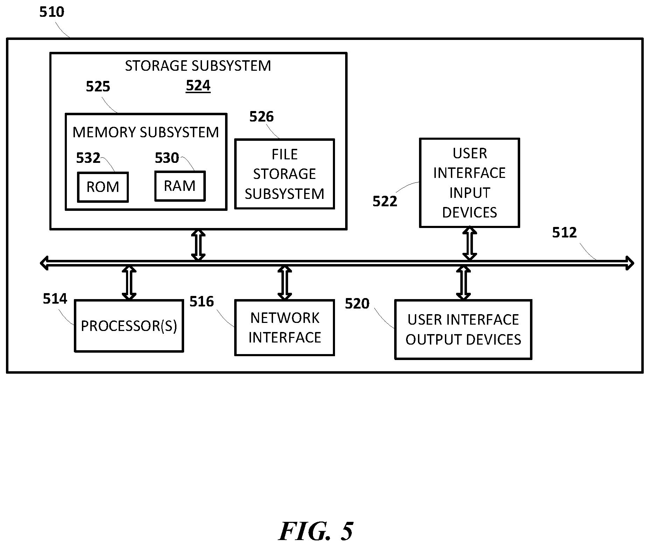

Turning now to FIG. 5, a block diagram of an example computing device 510 that may optionally be utilized to perform one or more aspects of techniques described herein is depicted. In some implementations, one or more of a client device, cloud-based LLM-based assistant 104 component(s), and/or other component(s) may comprise one or more components of the example computing device 510.

Computing device 510 typically includes at least one processor 514 which communicates with a number of peripheral devices via bus subsystem 512. These peripheral devices may include a storage subsystem 524, including, for example, a memory subsystem 525 and a file storage subsystem 526, user interface output devices 520, user interface input devices 522, and a network interface subsystem 516. The input and output devices allow user interaction with computing device 510. Network interface subsystem 516 provides an interface to outside networks and is coupled to corresponding interface devices in other computing devices.

User interface input devices 522 may include a keyboard, pointing devices such as a mouse, trackball, touchpad, or graphics tablet, a scanner, a touch screen incorporated into the display, audio input devices such as voice recognition systems, microphones, and/or other types of input devices. In general, use of the term "input device" is intended to include all possible types of devices and ways to input information into computing device 510 or onto a communication network.

User interface output devices 520 may include a display subsystem, a printer, a fax machine, or non-visual displays such as audio output devices. The display subsystem may include a cathode ray tube (CRT), a flat-panel device such as a liquid crystal display (LCD), a projection device, or some other mechanism for creating a visible image. The display subsystem may also provide non-visual display such as via audio output devices. In general, use of the term "output device" is intended to include all possible types of devices and ways to output information from computing device 510 to the user or to another machine or computing device.

Storage subsystem 524 stores programming and data constructs that provide the functionality of some or all of the modules described herein. For example, the storage subsystem 524 may include the logic to perform selected aspects of the methods disclosed herein, as well as to implement various components depicted in FIG. 1.

These software modules are generally executed by processor 514 alone or in combination with other processors. Memory 525 used in the storage subsystem 524 can include a number of memories including a main random access memory (RAM) 530 for storage of instructions and data during program execution and a read only memory (ROM) 532 in which fixed instructions are stored. A file storage subsystem 526 can provide persistent storage for program and data files, and may include a hard disk drive, a floppy disk drive along with associated removable media, a CD-ROM drive, an optical drive, or removable media cartridges. The modules implementing the functionality of certain implementations may be stored by file storage subsystem 526 in the storage subsystem 524, or in other machines accessible by the processor(s) 514.

Bus subsystem 512 provides a mechanism for letting the various components and subsystems of computing device 510 communicate with each other as intended. Although bus subsystem 512 is shown schematically as a single bus, alternative implementations of the bus subsystem 512 may use multiple busses.

Computing device 510 can be of varying types including a workstation, server, computing cluster, blade server, server farm, or any other data processing system or computing device. Due to the ever-changing nature of computers and networks, the description of computing device 510 depicted in FIG. 5 is intended only as a specific example for purposes of illustrating some implementations. Many other configurations of computing device 510 are possible having more or fewer components than the computing device depicted in FIG. 5.

In situations in which the systems described herein collect or otherwise monitor personal information about users, or may make use of personal and/or monitored information), the users may be provided with an opportunity to control whether programs or features collect user information (*e.g*., information about a user's social network, social actions or activities, profession, a user's preferences, or a user's current geographic location), or to control whether and/or how to receive content from the content server that may be more relevant to the user. Also, certain data may be treated in one or more ways before it is stored or used, so that personal identifiable information is removed. For example, a user's identity may be treated so that no personal identifiable information can be determined for the user, or a user's geographic location may be generalized where geographic location information is obtained (such as to a city, ZIP code, or state level), so that a particular geographic location of a user cannot be determined. Thus, the user may have control over how information is collected about the user and/or used.

Some other implementations disclosed herein recognize that training a generative model can require a significant quantity (*e.g*., millions) of training instances. Due to the significant quantity of training instances needed, many training instances will lack input and/or output properties that are desired when the generative model is deployed for utilization. For example, some training instance outputs for an LLM can be undesirably grammatically incorrect, undesirably too concise, undesirably too robust, etc. Also, for example, some training instance inputs for an LLM can lack desired contextual data such as user attribute(s) associated with the input, conversational history associated with the input, etc. As a result of many of the LLM training instances lacking desired input and/or output properties, the LLM will, after training and when deployed, generate many instances of output that likewise lack the desired output properties.

In addition, some implementations include one or more processors (*e*.*g*., central processing unit(s) (CPU(s)), graphics processing unit(s) (GPU(s), and/or tensor processing unit(s) (TPU(s)) of one or more computing devices, where the one or more processors are operable to execute instructions stored in associated memory, and where the instructions are configured to cause performance of any of the aforementioned methods. Some implementations also include one or more transitory or non-transitory computer readable storage media storing computer instructions executable by one or more processors to perform any of the aforementioned methods. Some implementations also include a computer program product including instructions executable by one or more processors to perform any of the aforementioned methods.

While several implementations have been described and illustrated herein, a variety of other means and/or structures for performing the function and/or obtaining the results and/or one or more of the advantages described herein may be utilized, and each of such variations and/or modifications is deemed to be within the scope of the implementations described herein. More generally, all parameters, dimensions, materials, and configurations described herein are meant to be exemplary and that the actual parameters, dimensions, materials, and/or configurations will depend upon the specific application or applications for which the teachings is/are used. Those skilled in the art will recognize, or be able to ascertain using no more than routine experimentation, many equivalents to the specific implementations described herein. It is, therefore, to be understood that the foregoing implementations are presented by way of example only and that, within the scope of the appended claims and equivalents thereto, implementations may be practiced otherwise than as specifically described and claimed. Implementations of the present disclosure are directed to each individual feature, system, and/or method described herein. In addition, any combination of two or more such features, systems, and/or methods, if such features, systems, and/or methods are not mutually inconsistent, is included within the scope of the present disclosure.

In various implementations, a method implemented using one or more processors is provided, and the method includes: receiving audio data capturing user speech. In response to receiving the audio data capturing the user speech, the method further includes: processing the audio data to determine a speech recognition of the user speech; processing the audio data to generate one or more audio embeddings that represent acoustic features of the audio data; and processing, using a machine learning (ML) model, both (i) the one or more audio embeddings that represent the acoustic features of the audio data and (ii) a text embedding that represent the speech recognition, to generate a model output. In various implementations, the method further includes: determining a response to the user speech based on the model output; and causing the response to be rendered in response to the user speech.

In some of the various implementations, optionally, the method further includes: determining whether the audio data capturing the user speech is noisy. In some of the various implementations, processing the audio data to generate the one or more audio embeddings is performed in response to determining that the audio data capturing the user speech is noisy.

In some of the various implementations, determining that the audio data capturing the user speech is noisy includes: determining that a distance between a user providing the user speech and a client device that captures the audio data is greater than a distance threshold.

In some of the various implementations, determining that the audio data capturing the user speech is noisy includes: determining that a signal-to-noise ratio (SNR) for the audio data does not satisfy a SNR threshold.

In some of the various implementations, processing the audio data to extract the acoustic features of the audio data includes: generating a spectrogram from the audio data capturing the user speech; and processing the spectrogram to extract spectrogram features corresponding to the audio data as the acoustic features. In some of the various implementations, processing the audio data to generate one or more audio embeddings that represent acoustic features of the audio data includes: processing the spectrogram features, using an audio encoder, to generate the one or more audio embeddings.

In some of the various implementations, the ML model is a transformer-based large language model (LLM). For example, the ML model can include a transformer decoder. As another example, the ML model can include a transformer decoder and a transformer encoder.

In some of the various implementations, processing both (i) the one or more audio embeddings that represent the acoustic features of the audio data and (ii) the text embedding that represent the speech recognition includes: processing the text embedding, using a multi-head attention mechanism, to generate intermediate attention features; and providing the intermediate attention features and the one or more audio embeddings to an additional multi-head attention mechanism. In some of the various implementations, the multi-head attention mechanism or the additional multi-head attention mechanism includes multiple attention heads each having a query matrix, a key matrix, and a value matrix.

In some of the various implementations, providing the intermediate attention features and the one or more audio embeddings to an additional multi-head attention mechanism causes the intermediate attention features to be multiplied with the query matrix, and causes the one or more audio embeddings to be multiplied with the key matrix and the value matrix, respectively.

In various implementations, an additional method is implemented using one or more processors. The additional method includes: generating one or more training instances, the one or more training instances including a first training instance that includes a first training instance input and a first ground truth response. The first training instance input can include, for instance, noisy audio data capturing a user speech. The first ground truth response can include, for instance, content responsive to the user speech, and can be generated based on content of the user speech.

In some of the various implementations, the additional method further includes: processing the first training instance input, using a pre-trained large language model (LLM), to generate a first training instance output; comparing the first training instance output with the first ground truth response, to determine a first difference; and fine-tuning the pre-trained LLM based on the determined first difference.

In some of the various implementations, the first ground truth response is generated based on comparing the content of the user speech and a transcript of the user speech determined using an ASR engine. In some of the various implementations, processing the first training instance input, using a pre-trained LLM, to generate the first training instance output includes: processing the noisy audio data capturing the user speech to determine an audio embedding for the noisy audio data; processing the transcript of the user speech to determine a text embedding for the transcript; processing the text embedding, using a multi-head attention mechanism of the pre-trained generative model, to generate intermediate attention features; and determining the first training instance output based on processing the intermediate attention features and the audio embedding, using a cross-attention mechanism of the pre-trained generative model.

In some of the various implementations, the one or more training instances include a second training instance that has a second training instance input and a second ground truth response. The second training instance input includes alternative noisy audio data capturing the user speech, and the noisy audio and the alternative noisy audio can include different levels of noise and/or different sources of noise. For example, the first ground truth response indicates a first source of noise in the noisy audio data, and/or the second ground truth response indicates a second source of noise in the alternative noisy audio data.

It is noted that, while the additional method describes fine-tuning the ML model via supervised learning, the ML model can also be trained or fine-tuned using other approaches, such as the RLHF as described previously.

In various implementations, a system is provided, where the system includes one or more processors. The system can further include memory storing instructions that, when executed by one or more of the processors, cause one or more of the processors to perform one or more operations. The one or more operations can include, for instance, in response to receiving the audio data capturing the user speech: process the audio data to determine a speech recognition of the user speech, process the audio data to generate one or more audio embeddings that represent acoustic features of the audio data, and process, using a machine learning (ML) model, both (i) the one or more audio embeddings that represent the acoustic features of the audio data and (ii) a text embedding that represent the speech recognition, to generate a model output. The one or more operations can further include: determine a response to the user speech based on the model output, and cause the response to be rendered in response to the user speech.

In some of the various implementations, the memory of the system stores further instructions that, when executed by the one or more processors, cause one or more of the processors to: process both (i) the one or more audio embeddings that represent the acoustic features of the audio data and (ii) the text embedding that represent the speech recognition by: processing the text embedding, using a multi-head attention mechanism, to generate intermediate attention features; and providing the intermediate attention features and the one or more audio embeddings to an additional multi-head attention mechanism.

In some of the various implementations, the memory of the system stores further instructions that, when executed by the one or more processors, cause one or more of the processors to: cause the intermediate attention features to be multiplied with a query matrix of the additional multi-head attention mechanism, and cause the one or more audio embeddings to be multiplied with a key matrix and a value matrix, of the additional multi-head attention mechanism, respectively.

This specification includes the following clauses:
1. A method implemented using one or more processors, the method comprising:
   receiving audio data capturing user speech; and
   in response to receiving the audio data capturing the user speech:
      processing the audio data to determine a speech recognition of the user speech,
      processing the audio data to generate one or more audio embeddings that represent acoustic features of the audio data, and
      processing, using a machine learning (ML) model, both (i) the one or more audio embeddings that represent the acoustic features of the audio data and (ii) a text embedding that represent the speech recognition, to generate a model output;
      determining a response to the user speech based on the model output, and
      causing the response to be rendered in response to the user speech.
2. The method of clause 1, further comprising:
   determining whether the audio data capturing the user speech is noisy.
3. The method of clause 2, wherein processing the audio data to generate the one or more audio embeddings is performed in response to determining that the audio data capturing the user speech is noisy.
4. The method of clause 3, wherein determining that the audio data capturing the user speech is noisy comprises:
   determining that a distance between a user providing the user speech and a client device that captures the audio data is greater than a distance threshold.
5. The method of clause 3, wherein determining that the audio data capturing the user speech is noisy comprises:
   determining that a signal-to-noise ratio (SNR) for the audio data does not satisfy a SNR threshold.
6. The method of clause 1, wherein processing the audio data to extract the acoustic features of the audio data comprises:
   generating a spectrogram from the audio data capturing the user speech, and
   processing the spectrogram to extract spectrogram features corresponding to the audio data as the acoustic features.
7. The method of clause 6, wherein processing the audio data to generate one or more audio embeddings that represent acoustic features of the audio data comprises:
   processing the spectrogram features, using an audio encoder, to generate the one or more audio embeddings.
8. The method of clause 1, wherein the ML model is a transformer-based large language model (LLM).
9. The method of clause 1, wherein processing both (i) the one or more audio embeddings that represent the acoustic features of the audio data and (ii) the text embedding that represent the speech recognition comprises:
   processing the text embedding, using a multi-head attention mechanism, to generate intermediate attention features, and
   providing the intermediate attention features and the one or more audio embeddings to an additional multi-head attention mechanism.
10. The method of clause 9, wherein the multi-head attention mechanism or the additional multi-head attention mechanism includes multiple attention heads each having a query matrix, a key matrix, and a value matrix.
11. The method of clause 10, wherein providing the intermediate attention features and the one or more audio embeddings to an additional multi-head attention mechanism causes the intermediate attention features to be multiplied with the query matrix, and the one or more audio embeddings to be multiplied with the key matrix and the value matrix, respectively.
12. A method implemented using one or more processors, the method comprising:
   generating one or more training instances, the one or more training instances including a first training instance that includes a first training instance input and a first ground truth response,
      wherein the first training instance input includes noisy audio data capturing a user speech, and
      wherein the first ground truth response includes content responsive to the user speech and is generated based on content of the user speech;
   processing the first training instance input, using a pre-trained large language model (LLM), to generate a first training instance output;
   comparing the first training instance output with the first ground truth response, to determine a first difference; and
   fine-tuning the pre-trained LLM based on the determined first difference.
13. The method of clause 12, wherein the first ground truth response is generated based on comparing the content of the user speech and a transcript of the user speech determined using an ASR engine.
14. The method of clause 13, wherein the transcript of the user speech determined using the ASR engine is a mistranscription that is different from the content of the user speech.
15. The method of clause 13, wherein processing the first training instance input, using a pre-trained LLM, to generate the first training instance output comprises:
   processing the noisy audio data capturing the user speech to determine an audio embedding for the noisy audio data;
   processing the transcript of the user speech to determine a text embedding for the transcript;
   processing the text embedding, using a multi-head attention mechanism of the pre-trained generative model, to generate intermediate attention features; and
   determining the first training instance output based on processing the intermediate attention features and the audio embedding, using a cross-attention mechanism of the pre-trained generative model.
16. The method of clause 12, wherein the one or more training instances including a second training instance that includes a second training instance input and a second ground truth response,
   wherein the second training instance input includes alternative noisy audio data capturing the user speech, the noisy audio and the alternative noisy audio including different levels of noise and/or different sources of noise.
17. The method of clause 16, wherein the first ground truth response indicates a first source of noise in the noisy audio data, and/or the second ground truth response indicates a second source of noise in the alternative noisy audio data.
18. A system comprising one or more processors, and memory storing instructions that, when executed by one or more of the processors, cause one or more of the processors to:
   in response to receiving the audio data capturing the user speech:
   process the audio data to determine a speech recognition of the user speech,
   process the audio data to generate one or more audio embeddings that represent acoustic features of the audio data, and
   process, using a machine learning (ML) model, both (i) the one or more audio embeddings that represent the acoustic features of the audio data and (ii) a text embedding that represent the speech recognition, to generate a model output;
   determine a response to the user speech based on the model output, and
   cause the response to be rendered in response to the user speech.
19. The system of clause 18, wherein the memory stores further instructions that, when executed by the one or more processors, cause one or more of the processors to process both (i) the one or more audio embeddings that represent the acoustic features of the audio data and (ii) the text embedding that represent the speech recognition by:
   processing the text embedding, using a multi-head attention mechanism, to generate intermediate attention features, and
   providing the intermediate attention features and the one or more audio embeddings to an additional multi-head attention mechanism.
20. The system of clause 19, wherein the memory stores further instructions that, when executed by the one or more processors, cause one or more of the processors to:
   cause the intermediate attention features to be multiplied with a query matrix of the additional multi-head attention mechanism, and
   cause the one or more audio embeddings to be multiplied with a key matrix and a value matrix, of the additional multi-head attention mechanism, respectively.

## Claims

1. A method implemented using one or more processors, the method comprising:
receiving audio data capturing user speech; and
in response to receiving the audio data capturing the user speech:
processing the audio data to determine a speech recognition of the user speech,
processing the audio data to generate one or more audio embeddings that represent acoustic features of the audio data, and
processing, using a machine learning (ML) model, both (i) the one or more audio embeddings that represent the acoustic features of the audio data and (ii) a text embedding that represent the speech recognition, to generate a model output;
determining a response to the user speech based on the model output, and
causing the response to be rendered in response to the user speech.

2. The method of claim 1, further comprising:
determining whether the audio data capturing the user speech is noisy.

3. The method of claim 2, wherein processing the audio data to generate the one or more audio embeddings is performed in response to determining that the audio data capturing the user speech is noisy.

4. The method of claim 2 or claim 3, wherein determining that the audio data capturing the user speech is noisy comprises:
determining that a distance between a user providing the user speech and a client device that captures the audio data is greater than a distance threshold, and/or
determining that a signal-to-noise ratio (SNR) for the audio data does not satisfy a SNR threshold.

5. The method of any one of the preceding claims, wherein processing the audio data to extract the acoustic features of the audio data comprises:
generating a spectrogram from the audio data capturing the user speech, and
processing the spectrogram to extract spectrogram features corresponding to the audio data as the acoustic features, and optionally:
wherein processing the audio data to generate one or more audio embeddings that represent acoustic features of the audio data comprises:
processing the spectrogram features, using an audio encoder, to generate the one or more audio embeddings.

6. The method of any one of the preceding claims, wherein the ML model is a transformer-based large language model (LLM).

7. The method of any one of the preceding claims, wherein processing both (i) the one or more audio embeddings that represent the acoustic features of the audio data and (ii) the text embedding that represent the speech recognition comprises:
processing the text embedding, using a multi-head attention mechanism, to generate intermediate attention features, and
providing the intermediate attention features and the one or more audio embeddings to an additional multi-head attention mechanism.

8. The method of claim 7, wherein the multi-head attention mechanism or the additional multi-head attention mechanism includes multiple attention heads each having a query matrix, a key matrix, and a value matrix, and optionally:
wherein providing the intermediate attention features and the one or more audio embeddings to an additional multi-head attention mechanism causes the intermediate attention features to be multiplied with the query matrix, and the one or more audio embeddings to be multiplied with the key matrix and the value matrix, respectively.

9. A method implemented using one or more processors, the method comprising:
generating one or more training instances, the one or more training instances including a first training instance that includes a first training instance input and a first ground truth response,
wherein the first training instance input includes noisy audio data capturing a user speech, and
wherein the first ground truth response includes content responsive to the user speech and is generated based on content of the user speech;
processing the first training instance input, using a pre-trained large language model (LLM), to generate a first training instance output;
comparing the first training instance output with the first ground truth response, to determine a first difference; and
fine-tuning the pre-trained LLM based on the determined first difference.

10. The method of claim 9, wherein the first ground truth response is generated based on comparing the content of the user speech and a transcript of the user speech determined using an ASR engine.

11. The method of claim 10, wherein the transcript of the user speech determined using the ASR engine is a mistranscription that is different from the content of the user speech.

12. The method of claim 10 or claim 11, wherein processing the first training instance input, using a pre-trained LLM, to generate the first training instance output comprises:
processing the noisy audio data capturing the user speech to determine an audio embedding for the noisy audio data;
processing the transcript of the user speech to determine a text embedding for the transcript;
processing the text embedding, using a multi-head attention mechanism of the pre-trained generative model, to generate intermediate attention features; and
determining the first training instance output based on processing the intermediate attention features and the audio embedding, using a cross-attention mechanism of the pre-trained generative model.

13. The method of claim 9, wherein the one or more training instances include a second training instance that includes a second training instance input and a second ground truth response,
wherein the second training instance input includes alternative noisy audio data capturing the user speech, the noisy audio and the alternative noisy audio including different levels of noise and/or different sources of noise, and optionally:
wherein the first ground truth response indicates a first source of noise in the noisy audio data, and/or the second ground truth response indicates a second source of noise in the alternative noisy audio data.

14. A system comprising one or more processors, and memory storing instructions that, when executed by one or more of the processors, cause one or more of the processors to:
in response to receiving the audio data capturing the user speech:
process the audio data to determine a speech recognition of the user speech,
process the audio data to generate one or more audio embeddings that represent acoustic features of the audio data, and
process, using a machine learning (ML) model, both (i) the one or more audio embeddings that represent the acoustic features of the audio data and (ii) a text embedding that represent the speech recognition, to generate a model output;
determine a response to the user speech based on the model output, and
cause the response to be rendered in response to the user speech.

15. The system of claim 14, wherein the memory stores further instructions that, when executed by the one or more processors, cause one or more of the processors to process both (i) the one or more audio embeddings that represent the acoustic features of the audio data and (ii) the text embedding that represent the speech recognition by:
processing the text embedding, using a multi-head attention mechanism, to generate intermediate attention features, and
providing the intermediate attention features and the one or more audio embeddings to an additional multi-head attention mechanism, and optionally:
wherein the memory stores further instructions that, when executed by the one or more processors, cause one or more of the processors to:
cause the intermediate attention features to be multiplied with a query matrix of the additional multi-head attention mechanism, and
cause the one or more audio embeddings to be multiplied with a key matrix and a value matrix, of the additional multi-head attention mechanism, respectively.
